# EUROPEAN PATENT APPLICATION

(11) **EP 1 367 689 A2**
(43) Date of publication of application: **03.12.2003**
(21) Application number: 03010618.1
(22) Date of filing: 12.05.2003
(51) Int. Cl.: H02J 13/00

(54) **Supervising system and operating method for areal power information**

(30) Priority: 31.05.2002 JP 2002159565
(71) Applicant: Hitachi, Ltd., Chiyoda-ku, Tokyo 101-8010 (JP)
(72) Inventor: Ono, Yasunori, Tokyo 100-8220 (JP); Uchiyama, Noriyuki, Tokyo 100-8220 (JP); Kondo, Shinichi, Tokyo 100-8220 (JP); Fujita, Yasunobu, Tokyo 100-8220 (JP); Kawamura, Naoki, Tokyo 100-8220 (JP)
(74) Representative: Strehl Schübel-Hopf & Partner

(57) **Abstract**

The areal power information center (5) collects, via the communications line (20), the system information on the power flow and the voltage in the areal power transmission/distribution system (10). Also, the center (5) collects the customer information on the consumed-power amounts by the respective customers (3a, 3b, 4), and on the generated-electricity amounts by the customers (3b). Moreover, the center (5) collects the wheeling information on a wheeling request for requesting a power transmission from one customer (3b) to another customer (3b). Furthermore, based on the respective information collected, the center (5) controls the reactive power from the areal-power-transmission/distribution-system voltage regulator (17), and the output-power from the electric generators (40). This control allows the center (5) to suppress a congestion of the power flow in the areal power transmission/distribution system (10).

## Description

### BACKGROUND OF THE INVENTION

### Field of the Invention

The present invention relates to an areal power-information supervising system and its operating method. In particular, it relates to an areal power-information supervising system and its operating method that are suitable for performing a power transmission/distribution while establishing a mutual cooperation between a specific areal power transmission/distribution system out of the power transmission/distribution system and distributed resources within the system.

### Description of the Related Art

Of the power system, the power transmission/distribution system is generally possessed by a public power-supplying industry (i.e., electric-power company). Namely, the method has been usually employed where power is transmitted to each customer via the power transmission/distribution system possessed by the public power-supplying industry. In recent years, however, the following power transmission has been performed: An industry that has an electric generator makes a contract with a customer in advance. Then, the industry transmits the power to the customer via the power transmission/distribution system possessed by the public power-supplying industry. In this case, the public power-supplying industry is in a position to offer a connection and supply service to the industry that has the electric generator. Here, consider, e.g., a specific-scale power producer/supplier that responds to a 20-kV or more standard-voltage and 2000-kW or more power demand. When the specific-scale power producer/supplier transmits, to the customer, electricity that the producer/supplier has generated or procured, the producer/supplier can take advantage of the connection and supply service offered by the public power-supplying industry. This service is carried out in accordance with articles of a connection and supply contract made between the public power-supplying industry and the specific-scale power producer/supplier.

Meanwhile, under investigation now is an attempt to introduce a large number of distributed resources (i.e., private electric generators) into a part of the power transmission/distribution system. However, in, e.g., "Gas Turbine Seminar, 28th Material Collections" ('00-1), the following problems have been pointed out: Introducing the distributed resources in large quantities causes difficulties in the maintenance and management of the power distribution system. This, further, results in a necessity for a demand-and-supply interface with an objective of performing the information exchange between the system side and the customer side.

In recent years, a lot of distributed resources have been set up in the customers. Moreover, in order to promote a further deregulation of the electric-utilities retail, under investigation from now on is an attempt to relax the regulations on the voltage and the power of electricity that a specific-scale power producer/supplier generates or procures.

If the regulations on the voltage and the power are relaxed down to, e.g., a 20-kV or less standard-voltage and a 2000-kW or less power, a large number of distributed resources are introduced into a specific areal power transmission/distribution system out of the power transmission/distribution system. As a result, the power generated by each distributed resource turns out to be transmitted to the other customers via the power transmission/distribution system. In a case like this, if a power wheeling is simply performed among the customers regardless of the state of the power transmission/distribution system, it is apprehended that the power flow in the power transmission/distribution system will be congested, or that the voltage management will become complicated.

### SUMMARY OF THE INVENTION

Consider the case of performing a power transmission/distribution while establishing a mutual cooperation between a specific areal power transmission/distribution system and each customer having a distributed resource. Here, it is an object of the present invention to provide an areal power-information supervising system and its operating method that make it possible to suppress a congestion of the power flow in the areal power transmission/distribution system.

In order to accomplish the above-described object, the following areal power-information supervising system is configured: The supervising system collects system information on the power flow and the voltage in a specific areal power transmission/distribution system out of the power transmission/distribution system, and collects customer information on the consumed-power amounts by the respective customers connected to the areal power transmission/distribution system, and on the generated-electricity amount by a customer out of the respective customers, the customer having a distributed resource, and collects wheeling information on a wheeling request for requesting a power transmission using the areal power transmission/distribution system, and, based on the respective information collected, creates a 1st control set-up value for controlling the voltage in the areal power transmission/distribution system, and creates a 2nd control set-up value for controlling an output-power from the distributed resource, and outputs the created 1st control set-up value to a voltage regulator for controlling the voltage in the areal power transmission/distribution system, and outputs the created 2nd control set-up value to a power-source output-power regulator for controlling the output-power from the distributed resource.

In the case of configuring the above-described areal power-information supervising system, the following elements can be added thereto:
(1) The supervising system, based on the respective information collected, creates a 3rd control set-up value for controlling a reactive power in the areal power transmission/distribution system. Next, the system outputs the created 3rd control set-up value to a reactive-power regulator for controlling the reactive power in the areal power transmission/distribution system.
(2) In the case of creating the respective control set-up values, the supervising system, based on the respective information collected, performs a simulation on the power flow and the voltage distribution in the areal power transmission/distribution system. Next, from this simulation result, the system creates the control set-up values for permitting the voltage and the frequency in the areal power transmission/distribution system to be maintained in specified ranges.

Also, in the case of operating the above-described areal power-information supervising system, the present invention employs an operating method for operating the areal power-information supervising system. Here, when a customer has made a contract with an industry on a certified-power connection fee basis, the operating method bills the customer for an areal-power-transmission/distribution-system usage fee, the customer having a distributed resource.

Also, in the case of operating the above-described areal power-information supervising system, when the customer has made a contract with the industry on a maximum-power connection fee basis, the operating method also allows the following fee-billing steps, the customer having the distributed resource, the industry possessing the areal power transmission/distribution system: Discounting the maximum-power connection fee every time the output-power from the distributed resource is operated using the power-source output-power regulator of the customer with an output-power that differs from an output-power that the customer wishes, the customer having the distributed resource, and billing the customer for a fee that results from subtracting the discounted connection-fee amount from the areal-power-transmission/distribution-system usage fee, the customer having the distributed resource.

According to the above-described supervising system, in the case of performing the power transmission/distribution while establishing the mutual cooperation between the areal power transmission/distribution system and the customer having the distributed resource, the system has been configured as follows: The system collects the system information on the power flow and the voltage in the areal power transmission/distribution system, and collects the customer information on the consumed-power amounts by the respective customers, and on the generated-electricity amount by the customer having the distributed resource, and further, collects the wheeling information on the wheeling request for requesting the power transmission using the areal power transmission/distribution system, and, based on the respective information collected, performs the simulation on, e.g., the power flow and the voltage distribution in the areal power transmission/distribution system, and, from this simulation result and as the control set-up values for permitting the voltage and the frequency in the areal power transmission/distribution system to be maintained in the specified ranges, creates the 1st control set-up value for controlling the voltage in the areal power transmission/distribution system, and creates the 2nd control set-up value for controlling the output-power from the distributed resource, and outputs the 1st control set-up value to the voltage regulator for controlling the voltage in the areal power transmission/distribution system, and outputs the 2nd control set-up value to the power-source output-power regulator for controlling the output-power from the distributed resource. In the areal power transmission/distribution system, this configuration makes it possible to suppress the congestion of the power flow while maintaining the voltage in the predetermined range.

In this case, the system creates the 3rd control set-up value for controlling the reactive power in the areal power transmission/distribution system. Next, the system outputs the 3rd control set-up value to the reactive-power regulator for controlling the reactive power in the areal power transmission/distribution system. This allows the voltage in the areal power transmission/distribution system to be maintained in the predetermined range.

Here, in the case of operating the areal power-information supervising system, a contract is concluded among a service offering industry for managing the areal power-information supervising system so as to offer the areal power-information supervising service, the areal-power-transmission/distribution-system possessing industry, and each contract customer. This allows the system to be operated in accordance with the contract.

In this case, letting the areal-power-transmission/distribution-system possessing industry be a contractor A, each contract customer be a contractor B, and the service offering industry be a contractor C, the contractor C concludes a contract on the areal power-information supervising service with the contractor A and the contractor B. Also, the contractor B concludes, with the contractor A, a connection and supply basic-contract for performing a power transmission using the areal power transmission/distribution system with the maximum power as its transmission limit.

Based on the following information, the contractor C performs the simulation on the power flow and the voltage distribution in the areal power transmission/distribution system concerned:
Supervisory information on the power transmission/distribution system provided from the contractor A, state data on a load supplied from the contractor B, the state data on the electric generator (i.e., distributed resource), and the wheeling request (i.e., request for performing the power transmission using the power transmission/distribution system of the contractor A) by the contractor B. Next, in accordance with this simulation result, the contractor C presents, to the contractor A and the contractor B, the control set-up values as command values for the necessary controls.

Furthermore, using power metering devices and communications technologies, the contractor C records an achievement of the power-transmission (i.e., wheeling) request amount and that of the power-transmission (i.e., wheeling) power amount. Based on these records, the contractor C calculates and determines a power transmission (i.e., wheeling) fee, using a unit price defined by the contract. The contractor B pays this power transmission fee to the contractor A. Simultaneously, the contractor A and the contractor B pay service fees for the service offered from the contractor C, i.e., the collection of the power information for maintaining the areal power transmission/distribution system, and the presentation of the control set-up values for the respective appliances.

Incidentally, it is needless to say that, in the case of carrying out this service, the service offering industry C can select either of the following alternatives so as to operate the system: Namely, as a power information collecting device for collecting the power information from the contractor A and the contractor B, a communications device, an information processing device of the contractor C in the areal power-information supervising system, and the like, the service offering industry C can use resources of its own, or can lease those of a third party. Also, if a part of the power information collecting device, the communications device, and the like is a resource of the contractor A or the contractor B, it is also possible for the industry C to lease the part so as to operate the system.

In the case of operating the areal power-information supervising system concretely in accordance with the areal power-information supervising service, the information on the power flow and the voltage in the areal power transmission/distribution system possessed by the contractor A is collected via a state information collecting device and a communications device provided in the areal power transmission/distribution system. Then, using a communications unit, the information collected is transmitted to an areal power information center possessed by the contractor C. The information, such as the generated-electricity amount in the distributed resource, the consumed-power amount in the load, and the wheeling request using the areal power transmission/distribution system, is collected via a state information collecting device and a communications device provided in in-customer substation facilities possessed by the respective contractors (: plural number) B. Then, the information collected is transmitted to the areal power information center possessed by the contractor C (i.e., the areal power-information supervising system).

Based on the above-described collected information and making an assumption that the wheeling request will be made from the contractor B, the contractor C (i.e., service offering industry) performs the simulation on the power flow, the voltage distribution, and the like within the areal power transmission/distribution system. Next, so as to permit the voltage and the frequency in the areal power transmission/distribution system to be maintained in the predetermined ranges, the contractor C
(1) performs, to the contractor A, the presentation of the control set-up values for the voltage regulator and the reactive-power regulator set up in the areal power transmission/distribution system, and
(2) performs, to the contractor B, the presentation of the output-power from the electric generator (i.e., distributed resource).

In the fee-billing processing, based on the following information and from the wheeled-power amount in a fee calculation time-period, a charge fee is calculated which is to be paid from the contractor B to the contractor A: The information stored in an areal power-transmission/distribution-system distributed resource operation situation database, and a fee-billing information database including measurement values by the power metering devices and the wheeling request history, these databases being set up in the areal power information center. Next, the result thus calculated is displayed on a display device. Furthermore, as the expenses for the above-described supervising and information services, charge fees are calculated which are to be paid from the contractor A and the contractor B to the contractor C. Next, the charge fees thus calculated are displayed on the display device. Based on the displays, collecting the fees is performed.

The configuration explained so far allows the contractor A to implement the management/maintenance of the areal power transmission/distribution system. Moreover, the configuration allows the contractor B to make an effective use of the distributed resource set up in the customer, thereby making it possible for the contractor B to implement an economical power acquisition.

Other objects, features and advantages of the invention will become apparent from the following description of the embodiments of the invention taken in conjunction with the accompanying drawings.

### BRIEF DESCRIPTION OF THE DRAWINGS

FIG. 1 is a block configuration diagram of a power transmission/distribution system to which the present invention has been applied;
FIG. 2 is an appliance configuration diagram of a customer having no electric generator;
FIG. 3 is an appliance configuration diagram of a customer having an electric generator;
FIG. 4 is a block configuration diagram of a supervisory control device;
FIG. 5 is a block configuration diagram of an areal power information center;
FIG. 6 is a flowchart for explaining calculation processing contents (i.e., generated output-power) in the areal power information center;
FIG. 7 is a flowchart for explaining calculation processing contents (i.e., voltage distribution) in the areal power information center;
FIGs. 8A and 8B are diagram for explaining an operating example of a wheeling, where FIG. 8A is a diagram for illustrating a characteristics result by an operating method according to the present invention, and FIG. 8B is a diagram for illustrating a characteristics result by an operating method in the prior art;
FIG. 9 is a flowchart for explaining a fee-billing processing according to the present invention; and
FIG. 10 is an appliance configuration diagram of a customer, which illustrates another embodiment of the present invention.

### DETAILED DESCRIPTION OF THE INVENTION

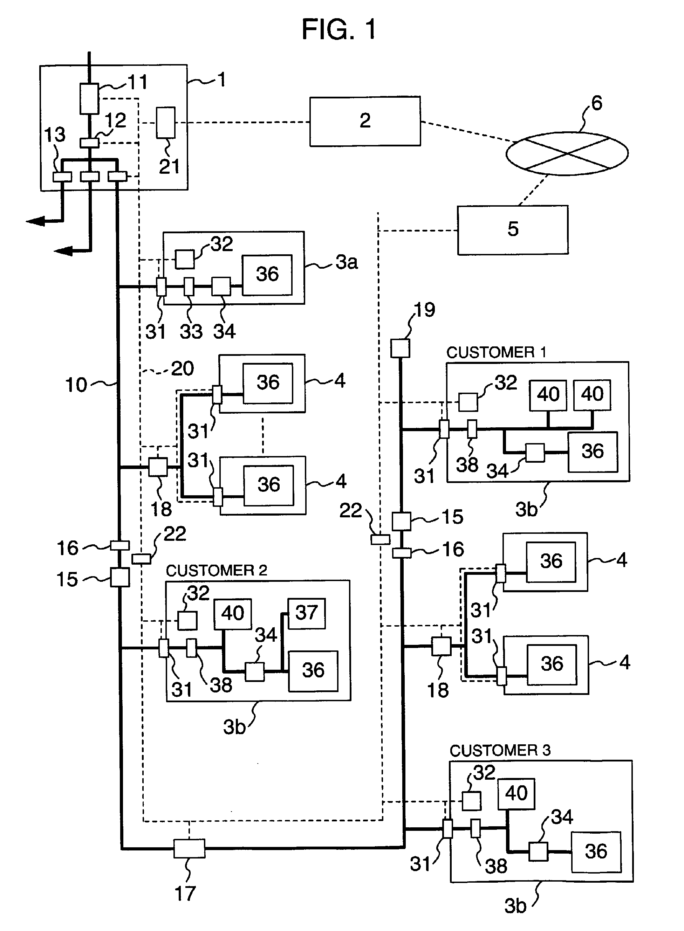

Hereinafter, based on the drawings, the explanation will be given below concerning an embodiment of the present invention. FIG. 1 is a block configuration diagram of a power transmission/distribution system, which illustrates the embodiment of the present invention. In FIG. 1, a contractor A (i.e., areal-power-transmission/distribution-system possessing industry) possesses a power distributing substation 1, an areal-system supervisory control center 2, and an areal power transmission/distribution system 10. Moreover, the power distributing substation 1 sets up therein a transformer 11 for stepping down voltages of upper transmission/distribution systems, a circuit breaker 12, plural number of feeder circuit-breakers 13, and a substation supervising device 21. Here, the substation supervising device 21 supervises appliance states of the transformer 11, the circuit breaker 12, and the feeder circuit-breakers 13. The information on the supervision result is transmitted to the areal-system supervisory control center 2 via a communications line 21a.

The areal power transmission/distribution system 10, which is connected to the feeder circuit-breakers 13 of the power distributing substation 1, sets up therein the following configuration appliances:
Automatic switches 15, a monitoring device 16, a communications unit 22, an areal-power-transmission/distribution-system voltage regulator 17, an interconnecting switch 19, and further, a reactive-power regulator (whose illustration is omitted). Information on these appliances is measured by sensors provided in the respective appliances. Then, the information obtained from the measurements by the respective sensors is transmitted to the areal-system supervisory control center 2 via a communications line 20. Furthermore, the information on the states of the respective appliances is transmitted via the communications line 20 to an areal power information center 5 possessed by the contractor C. Also, the areal-system supervisory control center 2 and the areal power information center 5 perform transmission/reception of the information via a communications network 6. Control signals determined in the areal-system supervisory control center 2 are transmitted to the respective appliances via the communications line 20.

Plural number of customers 3a, 3b, and 4 are connected to the areal power transmission/distribution system 10. A 6. 6-kV voltage is applied to the respective customers from the power distributing substation 1 via the areal power transmission/distribution system 10.

The customer 3a, as a customer that sets up therein no generating facility (i.e., distributed resource), includes the following configuration appliances: A load device 36, a protection device 33 including a relay and a circuit breaker, transformers 34 for stepping down the voltage to a voltage needed for the load, a supervisory control device 32 for supervising in-plant power information, and a power meter 31. The customers 3b, as customers that set up therein electric generators, includes the following configuration appliances: The load device 36, the transformer 34 for stepping down the voltage to a voltage needed for the load, the supervisory control device 32 for supervising in-customer power information, and the power meter 31. The customers 3b further include the electric generators (i.e., distributed resources) 40, and, in order to interconnect the electric generators 40 to the system 10, a system-interconnecting protection device 38 that has a function of detecting an islanding.

Incidentally, there exist some cases where, together with the electric generators 40, a storage battery 37 is set up within the customers 3b.

Also, the customers 4, as small-scale customers, include the load device 36 and the power meter 31. A voltage stepped down by a transformer 18 set up in the areal power transmission/distribution system 10 is fed to the customers 4.

The information on each customer, such as a load consumed-power amount, an electric generator output-power, and a wheeling request, is collected into the areal power information center 5 via the communications line 20. Meanwhile, control set-up values for the electric generator output-power and an in-plant voltage regulator, which are determined in the areal power information center 5, are transferred to each customer via the communications line 20.

In the above-described configuration, in the present embodiment, based on a contract among the areal-power-transmission/distribution-system possessing industry (i.e., contractor A), contract customers (i.e., contractors B) distributed at 5 locations, and a service offering industry (i.e., contractor C) for offering the areal power-information supervising service, the areal power-information supervising service is carried out. Incidentally, of the contract customers, FIG. 1 illustrates the customers 3b distributed at 3 locations.

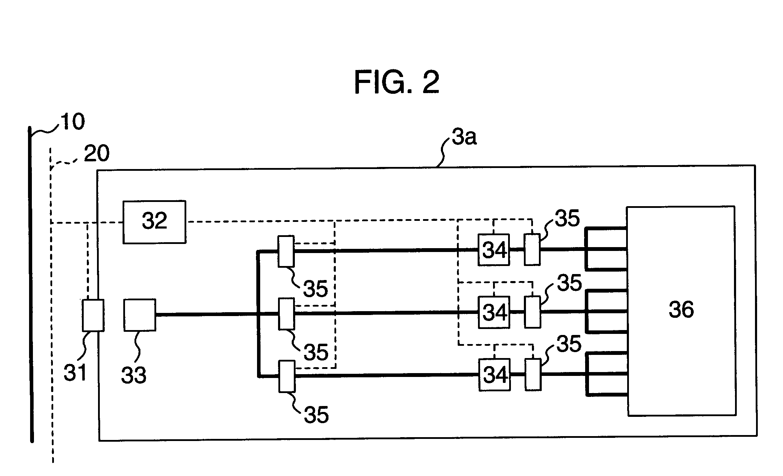

Next, in accordance with FIG. 2, the explanation will be given below concerning the concrete configuration of the customer 3a that sets up therein no electric generator. The customer 3a includes the power meter 31, the supervisory control device 32, the protection device 33, the transformers 34, circuit breakers 35, and the load (i.e., load device) 36. The respective appliances are set up along an in-plant line lead in from the areal power transmission/distribution system 10. The power meter 31 measures the power supplied to the customer 3a. This measurement value is transferred to the areal-system supervisory control center 2 and the areal power information center 5 via the communications line 20. Also, information on the states of the circuit breakers 35 and the transformers 34 is collected into the supervisory control device 32. Then, the collected information is transmitted to the areal power information center 5 via the communications line 20.

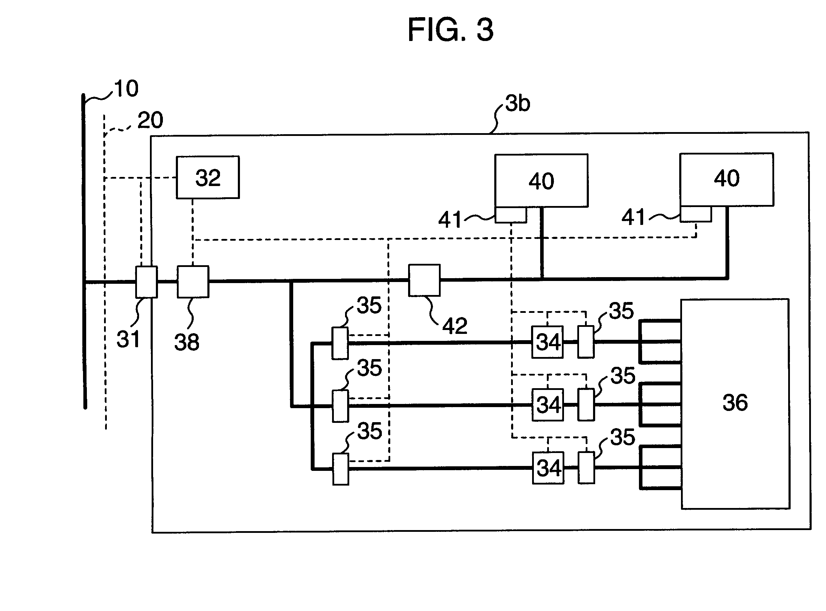

As illustrated in FIG. 3, the customers 3b that set up therein the electric generators includes the following appliances: The power meter 31, the supervisory control device 32, the transformers 34, the circuit breakers 35, the load (i.e., load device) 36, the electric generators 40, electric-generator supervisory control devices 41, a connecting circuit-breaker 42, the system-interconnecting protection device 38, and an electric-generator circuit breaker (whose illustration is omitted). The system-interconnecting protection device 38 includes a function of detecting an instantaneous voltage drop as well as the function of detecting the islanding. The power supplied to the customers 3b is measured by the power meter 31. Information on the states of the circuit breakers 35 and the transformers 34 is collected into the supervisory control device 32. Simultaneously, the generated-electricity amount by the electric generators 40 is supervised by the supervisory control devices 41, and the supervision result is collected into the supervisory control device 32. Moreover, the collected information, together with the information on the power, is transmitted to the areal power information center 5 via the communications line 20.

The supervisory control device 32 includes a processor, a database, a display device, and an input device. The database records the respective parameters (including the wheeled-power amount) regarding the power, and the appliances' operation states. The display device displays the supply state of the power into the premises of each customer, the information regarding the wheeling, and the appliances' operation states. An in-plant operator uses the input device to input driving command values or the like.

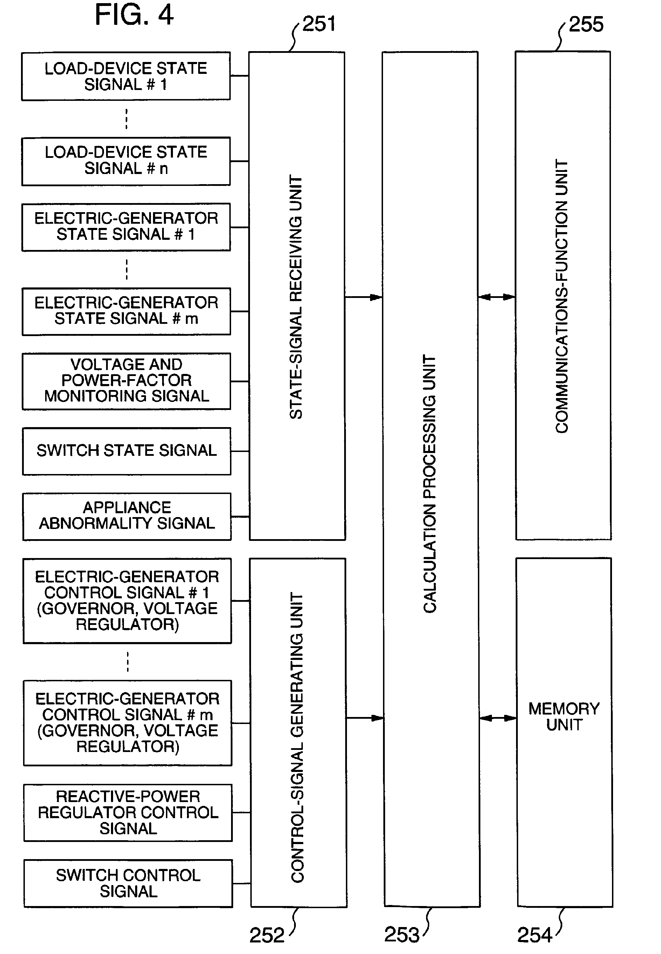

In accordance with FIG. 4, the explanation will be given below regarding the configuration and operation of the above-described processor. The processor includes a state-signal receiving unit 251, a control-signal generating unit 252, a calculation processing unit 253, a memory unit 254, and a communications-function unit 255 for performing communications with the outside of the in-plnat. The following signals are inputted into the state-signal receiving unit 251: Load-device state signals (: # 1 to # n), electric-generator state signals (: # 1 to # m), a voltage/power-factor monitoring signal, a switch state signal, and an appliance abnormality signal.

The consumed-power amount at the load 36, which is included in the load-device state signals, becomes a base for the power-demand forecast. Also, the appliance abnormality signal includes therein information on abnormal combustions and abnormal temperatures in engines and turbines, abnormal vibrations and insulation abnormalities in the generators, insulators' abnormalities in the receiving/distributing substation facility and the system-interconnecting device, and the like.

Based on the signals inputted into the state-signal receiving unit 251, the calculation processing unit 253 performs calculations for performing the power-demand forecast of the power and the optimization of the electric generator output-power, then causing the control-signal generating unit 252 to generate control signals based on the calculation results.

Concretely, the controls over the respective devices are performed by generating the following signals, which become the command values for the electric generators 40 where a governor (i.e., power-source output-power regulator) and an automatic voltage regulator (i.e., power-source voltage regulator) are built-in: Electric-generator control signals (: # 1 to # m), a reactive-power regulator control signal, and a switch control signal (including the load control). The supervisory control device 32 monitors the results of these controls.

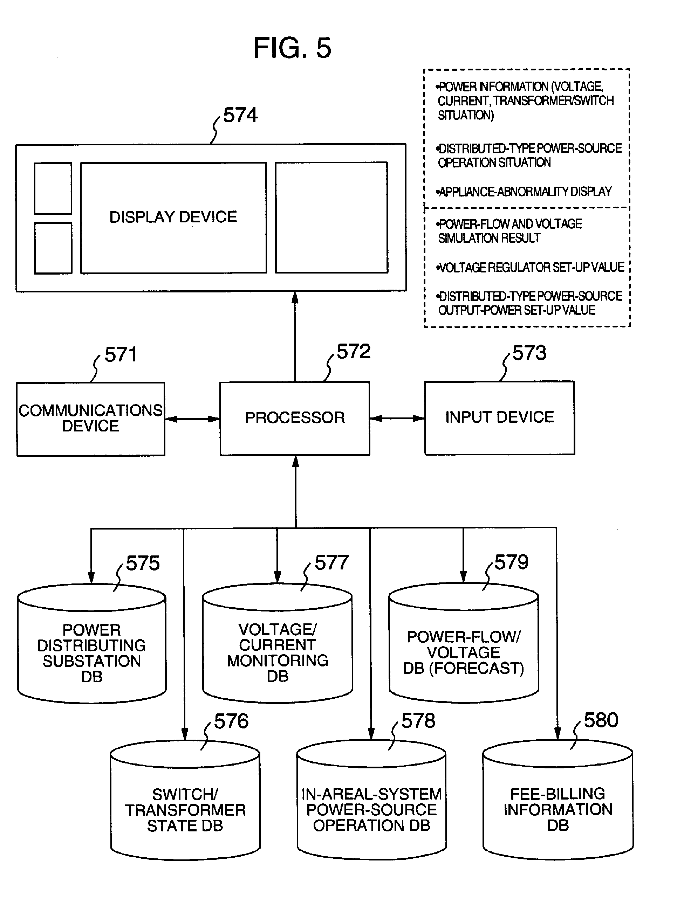

Next, in accordance with FIG. 5, the explanation will be given below concerning the concrete configuration of the areal power information center 5 that configures one element of the areal power-information supervising system. The areal power information center 5 includes a communications device 571, a processor 572, an input device 573, a display device 574, and databases 575 to 580.

The communications device 571 collects the information transmitted from the respective customers 3a, 3b, and 4 via the communications line 20. Next, the device 571 outputs the collected information to the processor 572 or, outputs, via the communications line 20, control signals in accordance with the calculation results by the processor 572. Moreover, based on the information collected by the device 571 and information stored in the databases 575 to 580, the processor 572 performs simulations on the power flow and the voltage in the areal power transmission/distribution system 10, thereby creating the following control set-up values:
A 1st control set-up value for controlling the voltage in the areal power transmission/distribution system 10, a 2nd control set-up value for controlling the output-power from the electric generators (i.e., distributed resources), and further, a 3rd control set-up value for controlling the reactive power in the areal power transmission/distribution system 10. In addition, the processor 572 transmits the control signals corresponding to the respective control set-up values via the communications device 571 and the communications line 20.

Also, the processor 572 performs a fee-billing processing in accordance with the contract. Also, the processor 572 displays, as the calculation results, the following information on a screen of the display device 574: The power information (e.g., the states of the voltages, the currents, and the transformers/switches), the operation states of the distributed resources, display of the appliances' abnormalities, the power-flow and voltage simulation results in the system, the respective control set-up values, and the like.

The results of the calculation processing and the monitoring performed by the processor 572 are stored into the respective databases 575 to 580. Furthermore, data is fetched as required from any one of the databases, thereby performing a different calculation processing. Additionally, the database 575 stores the data on the power distributing substation 1. The database 576 stores the data on the automatic switches 15, the circuit breakers 35, and the transformers 18 and 34. The database 577 stores the data on the voltage/current monitoring in each section. The database 578 stores the data on the operation situation of the in-areal-system power-sources (i.e., electric generators 40). Also, the database 579 stores the forecast data on the power flow and the voltage in the areal power transmission/distribution system 10, and the database 580 stores the data on the fee-billing information.

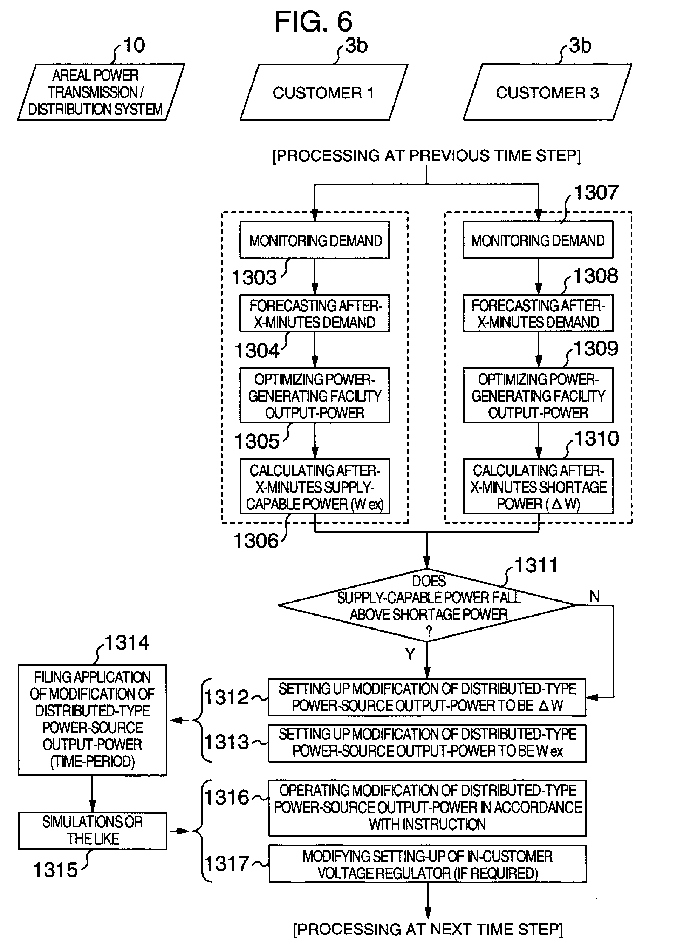

Next, in accordance with a flowchart in FIG. 6, the explanation will be given below regarding processing contents at the time when, as calculation processings (i.e., generated output-power) in the areal power information center 5 and in the case of dividing the customers 3b into customers 1, 2, and 3, the wheeling is performed between the customer 1 and the customer 3 using the areal power transmission/distribution system 10. Here, however, the processings within the dashed lines in FIG. 6 are performed by the supervisory control device 32 in each customer.

At first, in each of the customers 1 and 3 out of the customers 3b, a monitoring on the power demand is performed with a predetermined time-interval, e.g., a 10-minute time-interval (step 1303, step 1307). Then, an after-10-minutes power-demand forecast is performed (step 1304, step 1308). After that, based on each forecast, the power-generating facility output-power is optimized (step 1305, step 1309). Here, if the power supply is found to fall above the power demand, the supply-capable power (:W ex) is calculated (step 1306). Meanwhile, if the power supply is found to fall below the power demand, the shortage power (:ΔW) is calculated (step 1310). At this time, the customer 1 has the remaining enough power for the further power supply, whereas the customer 3 has the power shortage.

Next, it is judged whether or not the supply-capable power (:W ex) falls above the shortage power (:ΔW) (step 1311). If the supply-capable power (:W ex) falls above the shortage power (:ΔW), the output-power from the distributed resources included in the customer 1 is set up so that the output-power is increased by ΔW (step 1312).

Meanwhile, if the supply-capable power (:W ex) falls below the shortage power (:ΔW), the output-power increase in the distributed resources included in the customer 1 is set up to be W ex (step 1313). When modifying the output-power from the distributed resources to W ex, an application is filed regarding a time-period during which the output-power increase (i.e., modification) in the distributed resources is to be performed (step 1314). Moreover, based on this application, in the areal power information center 5, the simulations are performed concerning the power flow and the voltage in the areal power transmission/distribution system 10 (step 1315). Based on these simulation results, the areal power information center 5 issues, to the customer 1, an instruction of the output-power increase (i.e., modification) in the distributed resources. In accordance with this instruction, the customer 1 performs a control for increasing the output-power from the distributed resources (step 1316). Incidentally, if required, a setting-up modification of the in-customer voltage regulator is also performed, (step 1317). After this, at the next time step, e.g., 10 minutes after, basically the same processing is performed.

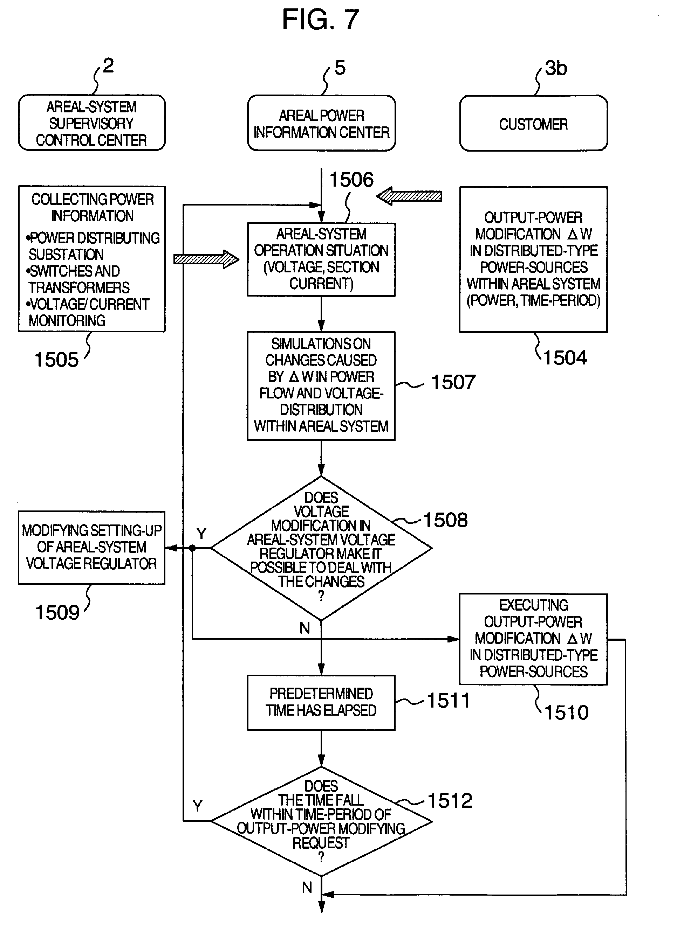

Next, in accordance with a flowchart in FIG. 7, the explanation will be given below concerning processing contents at the time when, as calculation processings in the areal power information center 5, the calculation processings regarding the power flow and the voltage distribution are performed. At first, an application of the output-power modification ΔW in the distributed resources within the areal power transmission/distribution system is filed from the customer side to the areal power information center 5 (step 1504). The filing of this application causes the areal power information center 5 to collect the respective information via the communications line 20, e.g., the power information in the power distributing substation 1, the automatic switches 15, and the transformers 34, and the power information on the current/voltage monitoring results (step 1505). Simultaneously, the center 5 inputs the information on the areal-system operation situation of the voltage, the section current, and the like (step 1506). Furthermore, based on the collected information and the application of the output-power modification ΔW in the distributed resources, the center 5 performs simulations on changes caused by the output-power modification ΔW in the power flow and the voltage-distribution within the areal power transmission/distribution system (step 1507). Based on these simulation results, the center 5 judges whether or not performing a voltage control over the areal-system voltage regulator 17 makes it possible to deal with the changes (step 1508). If the voltage control makes it possible to deal with the changes, the center 5 instructs the areal-system supervisory control center 2 to perform the setting-up modification of the areal-system voltage regulator 17 (step 1509). Also, the center 5 instructs the customer to perform the output-power modification ΔW in the distributed resources (step 1510).

Meanwhile, if the voltage modification in the areal-system voltage regulator 17 fails to deal with the changes, the center 5 gives no permission to the output-power modification in the distributed resources. In addition, when a predetermined time has elapsed (step 1511) and, if the time that has elapsed falls within the time-period during which the application of the output-power modification in the distributed resources is to be filed (step 1512), based on the areal-system operation situation after the lapse of the predetermined time, the center 5 performs simulations on the power flow and the voltage-distribution within the areal power transmission/distribution system. This allows the center 5 to reset the output-power from the power-sources and the voltage regulator, thereby terminating the processings in this routine.

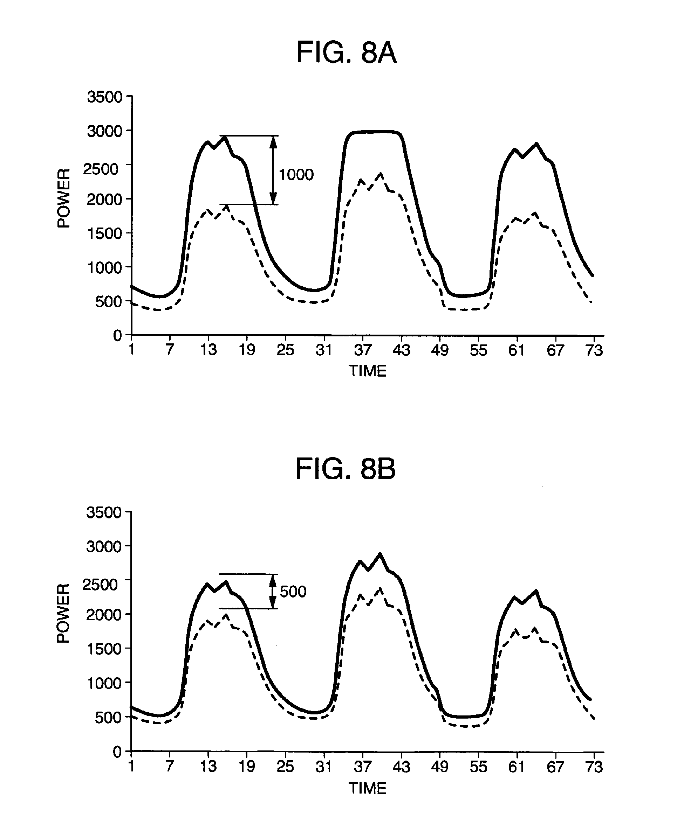

FIGs. 8A and 8B illustrate transmitted-power amounts in the power transmission/distribution system with which the customer 3 interconnects itself when the power wheeling is performed from the customer 1 to the customer 3. Moreover, the dashed lines illustrate transmitted-power amounts when no wheeling is performed, and the solid lines illustrate all the transmitted-power amounts including the power wheeling. Also, the transmitted-power capacity in the power transmission/distribution system is equal to 3000 kW. The amounts and the capacity are data obtained during 3 days before and after a day when the summer-session demand becomes its maximum.

FIG. 8A is a characteristics diagram at the time when the present invention has been applied. FIG. 8B is a characteristics diagram at the time when the conventional power transmission service, which is determined by the contract power and facility capacity of the related customer, has been applied. In the case of FIG. 8B, the transmitted-power amount is equal to 500 kW.

On the other hand, in the case of FIG. 8A, although the limitation is imposed on the wheeled-power amount on the 2nd day in the diagram, the wheeling of 1000-kW transmitted-power amount is possible on the other days. When seen from a full-year standpoint as well, the time-period during which the limitation is imposed on the wheeled-power amount is just a few days.

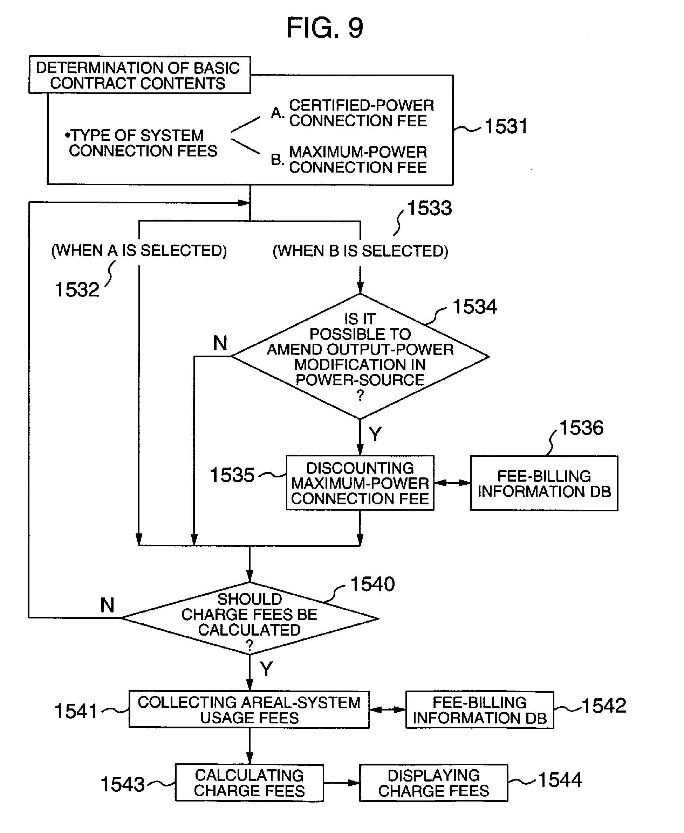

Next, in accordance with a flowchart in FIG. 9, the explanation will be given below concerning the operation at the time of performing the fee-billing processing. At first, with respect to a connection and supply contract, the contract contents are determined in advance between the contractor A and the contractor B, and further, between the contractor A and the contractor C, and the contractor B and the contractor C, respectively (step 1531). Here, the contractor C offers the information needed for implementing the above-described connection and supply contract. In this case, as the type of the system connection fees, either of the following types is selected: A:
certified-power connection fee (by which the connection to the system is certified at any time within a range of the contracted power), or B: maximum-power connection fee (by which the connectable maximum power is specified beforehand, and, depending on the system situation, a limitation is imposed on the connectable power).

When establishing the connection to the system, as the type of the connection fees, when A is selected (step 1532), the output-power modification in a desired power-source can be performed within the range of the contract. Meanwhile, when B is selected (step 1533), if it is possible to amend the output-power modification in the power-source (step 1534), a discounting is applied to the maximum-power connection fee (step 1535). These series of processings are recorded into the fee-billing information database 580 (step 1536).

Next, when it comes to a time-period at which to calculate charge fees (step 1540), collecting areal-system usage fees is performed (step 1541). Next, this collection result is recorded into the fee-billing information database 580 (step 1542). Moreover, based on the collection of the areal-system usage fees and the information in the fee-billing information database 580, the charge fees are calculated (step 1543), then displaying the charge fees on the display screen of the display device 574 (step 1544). Namely, when calculating the charge fees, the charge fees are calculated depending on whether A has been selected or B has as the type of the connection fees, and also depending on whether or not the maximum-power connection fee has been discounted. Then, the calculation results are displayed on the screen.

So far, as the areal power transmission/distribution system, the explanation has been given regarding the middle-voltage power transmission/distribution system. The present invention, however, can also be applied to the high-voltage power transmission/distribution system.

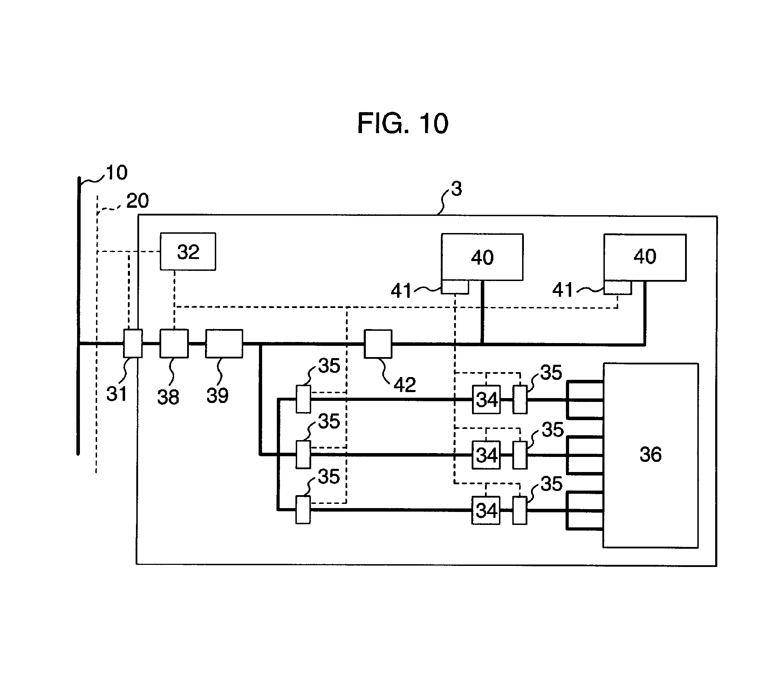

FIG. 10 is a block diagram for illustrating the appliance configuration of a customer, which illustrates another embodiment of the present invention. The appliance configuration of the customer 3 illustrated in FIG. 10 is an example of that of a customer interconnected to a 33-kV system. In this example, there is provided a transformer 39 for stepping down, to 6. 6 kV, the voltage at an interconnection point to the system. Except for the transformer 39, the basic appliance configuration is the same as that of the customer 1 illustrated in FIG. 1.

As having been explained so far, according to the present embodiment, when performing the power transmission/distribution while establishing the mutual conjunction between the areal power information center 5 and the areal power transmission/distribution system 10, the present embodiment collects the system information on the power flow and the voltage in the areal power transmission/distribution system 10, and collects the customer information on the consumed-power amounts and the generated-electricity amounts by the respective customers, and further, collects the wheeling information on the wheeling request for requesting the power transmission using the areal power transmission/distribution system 10, and, based on the information collected, controls the areal-power-transmission/distribution-system voltage regulator 17, and controls the output-power from the distributed resources. This configuration makes it possible to suppress the congestion of the power flow in the areal power transmission/distribution system 10.

Also, according to the present embodiment, as the merits of the contractor A (i.e., areal-power-transmission/distribution-system possessing industry),
(1) the contractor A, based on the information offered, can maintain the voltage and the frequency in the areal power transmission/distribution system 10, and can control the power flow therein.
(2) The contractor A can make an effective use of the areal power transmission/distribution system 10.

Meanwhile, as the merits of the contractor B (i.e., each contract customer),
(1) the contractor B can operate the in-customer distributed resources with a high efficiency, since the regulations on the system interconnection of the distributed resources are relaxed.
(2) The contractor B finds the power wheeling easier.

Also, as the merits presented to the contractor C (i.e., service offering industry),
(1) the contractor C finds it possible to do a stable business over a comparatively long time-period.
(2) The contractor C can offer the various services that result from making full use of the collected power information.

Concretely, these merits are as follows:
Based on the following information, the contractor C performs the simulation on the areal power transmission/distribution system 10 concerned: The supervisory information on the areal power transmission/distribution system 10 provided from the contractor A, the state data on the load supplied from the contractor B, and the state data on the electric generator and the power wheeling request from the contractor B. This simulation allows the contractor C to present, to the contractor A and the contractor B, the command values (i.e., control set-up values) for the necessary controls. Also, base on the above-described power wheeling request, power transmission/distribution system, and data on the load and the electric generator, it becomes possible for the contractor C to charge the fees.

As having been explained so far, according to the present invention, it becomes possible to suppress the congestion of the power flow in the areal power transmission/distribution system.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An areal power-information supervising system comprising:
means for collecting system information on the power flow and the voltage in a specific areal power transmission/distribution system (10) out of the power transmission/distribution system,
means for collecting customer information on the consumed-power amounts by respective customers (3a, 3b, 4) connected to said areal power transmission/distribution system (10), and on the generated-electricity amount by said customer (3b) out of said respective customers (3a, 3b, 4), said customer (3b) having a distributed resource (40),
means for collecting wheeling information on a wheeling request for requesting a power transmission using said areal power transmission/distribution system (10),
means for creating, based on said respective information collected, a 1st control set-up value for controlling said voltage in said areal power transmission/distribution system (10),
means for creating a 2nd control set-up value for controlling the output-power from said distributed resource (40),
means for outputting said created 1st control set-up value to a voltage regulator (17) for controlling said voltage in said areal power transmission/distribution system (10), and
means for outputting said created 2nd control set-up value to a power-source output-power regulator for controlling said output-power from said distributed resource (40).

2. An areal power-information supervising system as claimed in Claim 1, further comprising:
means for creating, based on said respective information collected, a 3rd control set-up value for controlling a reactive power in said areal power transmission/distribution system (10), and
means for outputting said created 3rd control set-up value to a reactive-power regulator for controlling said reactive power in said areal power transmission/distribution system (10).

3. An areal power-information supervising system as claimed in Claim 2, wherein, in creating said respective control set-up values, said areal power-information supervising system performs a simulation on said power flow and the voltage distribution in said areal power transmission/distribution system (10), based on said respective information collected, and creats said control set-up values from this simulation result, said control set-up values allowing said voltage and the frequency in said areal power transmission/distribution system (10) to be maintained in specified ranges.

4. An areal-power-information-supervising-system operating method for operating an areal power-information supervising system as claimed in Claim 1, said method comprising a step for billing said customer (36) for an areal-power-transmission/distribution-system usage fee, when said customer (3b) has made a contract with an industry on a certified-power connection fee basis, said customer (3b) having said distributed resource (40), said industry possessing said areal power transmission/distribution system (10).

5. An areal-power-information-supervising-system operating method for operating an areal power-information supervising system as claimed in Claim 1 under a condition in which said customer (3b) has made a contract with an industry on a maximum-power connection fee basis, said industry possessing said areal power transmission/distribution system (10), the method comprising steps:
discounting a maximum-power connection fee every time said output-power from said distributed resource (40) is driven using said power-source output-power regulator of said customer (3b) with an output-power that differs from an output-power that said customer (3b) wishes, said customer (3b) having said distributed resource (40), and
billing said customer (3b) for a fee that results from subtracting the discounted connection-fee amount from said areal-power-transmission/distribution-system usage fee.
